# EUROPEAN PATENT SPECIFICATION

(11) **EP 1 801 448 B1**
(45) Date of publication and mention of the grant of the patent: **11.06.2008**
(21) Application number: 05425912.2
(22) Date of filing: 23.12.2005
(51) Int. Cl.: F16D 65/12

(54) **Disc for disc brakes**
Bremsscheibe
Disque de frein

(43) Date of publication of application: 27.06.2007
(73) Proprietor: Brembo Ceramic Brake Systems S.p.A, 24040 Stezzano (Bergamo) (IT)
(72) Inventor: Goller, Ralf Siegfried, 24124 Bergamo (IT); Colombo, Fabio, 20032 Cormano (Milano) (IT); Bonfanti, Roberto, 24020 Scanzorosciate (Bergamo) (IT)
(74) Representative: Long, Giorgio

(56) References cited:
- EP-A- 1 124 071
- GB-A- 1 513 519
- US-A- 5 007 508

## Description

**.** In the broadest aspect thereof, the present invention relates to a disc for disc brake.

. Particularly, the present invention relates to a disc for disc brake, comprising a support (called bell) and a braking band suitable to cooperate with disc brake calipers in order to exert a braking action on a vehicle. Said braking band comprises a body extending around a symmetry axis and being laterally defined by braking surfaces. Said body can be obtained by the interaction of a mixture comprising filament rovings essentially consisting of carbon, with silicon at a temperature which is sufficient to cause the melting of said silicon.

**.** With the term "filaments essentially consisting of carbon" is meant to include fibrous materials obtained by means of pyrolysis of different products either of synthetic origin, for example, polyacrylonitrile (PAN) and polysiloxane, or of natural origin, for example pitch, cellulosic natural resources such as the vegetable fibres and wood.

**.** With the term "filament rovings" is meant to comprise sets of filaments which range from 3000 to 50000 units and having a diameter ranging between 2 and 3 µm, associated to one another and impregnated with a resin, for example polyurethane. Then, said rovings are broken, such as to have a length which is lower than 30 mm, and finally they are randomly arranged within the mixture.

**.** These randomly-arranged filament rovings are usually defined based on the number of the units forming the roving, for example with 3K, 10K, 50K, etc..

. The use of these ceramic composite materials is known in various applications where a high resistance to impact, compression, and friction-generated temperature is required, and these characteristics may not be ensured by simple ceramic materials due to the inherent brittleness thereof. Particularly, ceramic composite materials for braking applications are known which are obtained by the interaction of silicon with a mixture comprising carbon filament rovings, optionally reinforcing fibres, and additives at a temperature in which the silicon is at the molten state.

**.** In accordance with the prior art, the preparation of these composite materials may be carried out as follows: the filament rovings are mixed with a binding resin, pitch and other additives and the mixture is set in a mould where it is moulded with the aid of heating and the application of a pressure, thus obtaining a shaped preform.

. The preform is then subjected to a first baking at such a temperature as to cause either the carbonization or pyrolysis of the resin.

**.** Due to this baking, the preform acquires a certain porosity because of the loss of volatile material at the temperatures of the carbonization or pyrolysis.

. Then, the baked preform is subjected to a second baking in the presence of silicon at such a temperature as to cause the melting of the silicon and the infiltration thereof into the pores of said preform.

**.** The silicon infiltration allows the cohesion of the carbon filament rovings to be increased whereas, at the same time, the melted silicon, in the conditions of the second baking, partly reacts with the carbon of the preform thus forming silicon carbides having the effect of improving the cohesion characteristics of the material.

**.** The composite material prepared with the above-mentioned method is often used in the manufacturing of brakes and clutches components for vehicles, particularly for manufacturing braking bands for brakes, due to its good characteristics of resistance to compression, friction-generated temperature and wear.

. Despite the above-mentioned good characteristics the known braking bands for disc brake in said composite material have the serious drawback that incidental cracks or breaks may be formed thereon. Following thermal and/or compressive stresses, the cracks quickly tend to spread all over the structure of this material thus causing the total disgregation of the same.

. Therefore, it is understood that the use of the known braking bands for vehicle disc brakes involves considerable risks to the user safety.

**.** The problem addressed by the present invention is to provide a disc for disc brake, which has such structural and functional characteristics as to overcome said drawbacks mentioned with reference to the prior art.

**.** This problem is solved by a disc for disc brakes such as defined in claim 1 and in the claims dependent thereon.

. The present invention relates to a disc for disc brakes, comprising a support and a braking band suitable to cooperate with brake calipers in order to exert a braking action on a vehicle, said braking band comprising a shaped body extending around a symmetry axis and being laterally defined by braking surfaces, said band being made of composite material which can be obtained by the interaction of a mixture, comprising filament rovings, essentially consisting of carbon, randomly arranged and having sizes which are not larger than 30mm, with silicon at a temperature which is sufficient to cause the melting of said silicon, characterized in that it comprises at least one strengthening ring in a carbon-carbon material located near or at the cracking point.

**.** With cracking point is meant the inner circumference/edge of the braking band and, more particularly, is meant the part of braking band which is operatively connected to the support, after the disc has been assembled.

**.** In the case of an axial-symmetrical structure such as a disc for disc brake, as a result of functional calculus the crack propagation paths have higher probability of being radially located to the body, thus spreading from the inside to the outside of the braking band until they cause the burst thereof. This is due to the fact that the point of the braking band suffering the higher thermal and mechanical stresses during the braking is the inner edge thereof and particularly the part of band which is operatively connected to the support, after the disc has been assembled. Therefore, in this point, the cracks are formed which radially spread over the band structure thus causing the disintegration of the latter.

**.** Therefore, in a disc for disc brake the crack propagation is hindered by positioning said strengthening ring at or near the inner edge of the braking band, i.e. exactly where the cracks start and spread.

. Advantageously, said at least one strengthening ring is either located near or at the inner edge of the braking band at the level of at least one braking surface or embedded within the ceramic material that forms the braking band. Preferably, the ring is located at the level of at least one braking surface and is operatively connected to the support, after the disc has been assembled.

. Therefore, the present invention is based on having surprisingly found that by positioning at least one strengthening ring, made of carbon-carbon material characterized by a very high mechanical resistance and low brittleness, at the inner edge of the braking band of a disc for disc brake, without changing the band original composition, the problem is solved of preventing the cracks from being formed and spreading over the whole shape during the use of this disc.

**.** In a further embodiment, said braking body also comprises reinforcing fibres, besides the "filaments essentially consisting of carbon", which preferably consist of carbon, or other materials, such as SiC, Si₃N₄, TiC, or metal materials, such as platinum, suitable to resist the temperatures of the interaction with silicon. While the "filaments essentially consisting of carbon" are randomly arranged within the mixture providing the braking body, the reinforcing fibres are located such as to extend along the shape of said body, preferably they are radially arranged. In other words, the reinforcing fibres are incorporated into the material such as to take fixed and predetermined positions.

**.** The incorporation may be carried out in different ways. For example, the reinforcing fibres may be ordered in a plurality of rovings which are arranged according to predetermined directions.

**.** These directions may be, for example, filling and warp directions, said rovings providing a fabric.

**.** Alternatively, the reinforcing fibres may provide a nonwoven, for example a felt.

**.** It is important that the reinforcing fibres should have satisfactory cohesion characteristics with the other components of the composite material providing the braking band in order to avoid that the whole structure may disgregate during the use even in the absence of cracks or breaks.

**.** Moreover, the reinforcing fibres have to be substantially inert relative to the components of the composite material and to have a sufficient resistance to the pyrolysis and silicon infiltration temperatures in order to avoid that they may be degraded during the preparation of the material forming the disc.

. For an example of disc for disc brakes comprising said reinforcing fibres see EP 1 124 071 of the same Applicant.

**.** Further characteristics and the advantages of the disc for disc brake according to the invention will be understood from the description of preferred embodiments thereof as set forth herein below, which are given by way of indicative and non-limiting example, with reference to the annexed figures, in which:

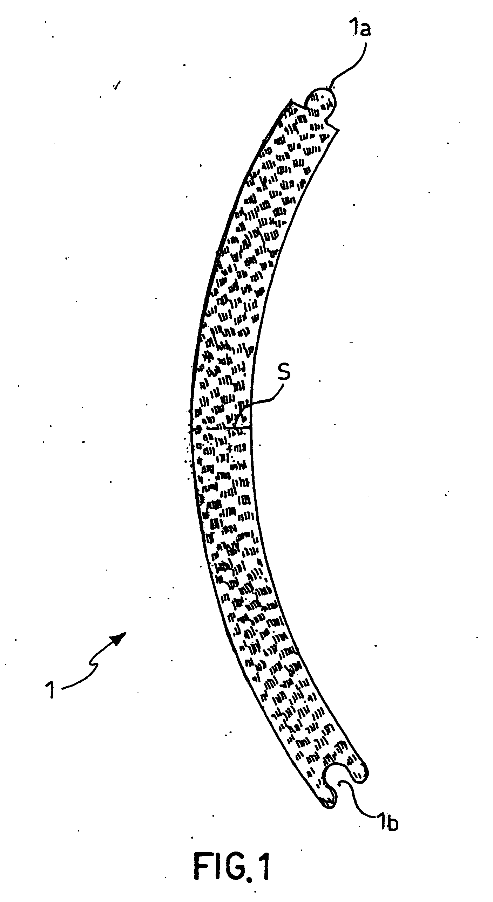

**.** Fig. 1 is a top view of a sector of the strengthening ring according to an embodiment of the invention;

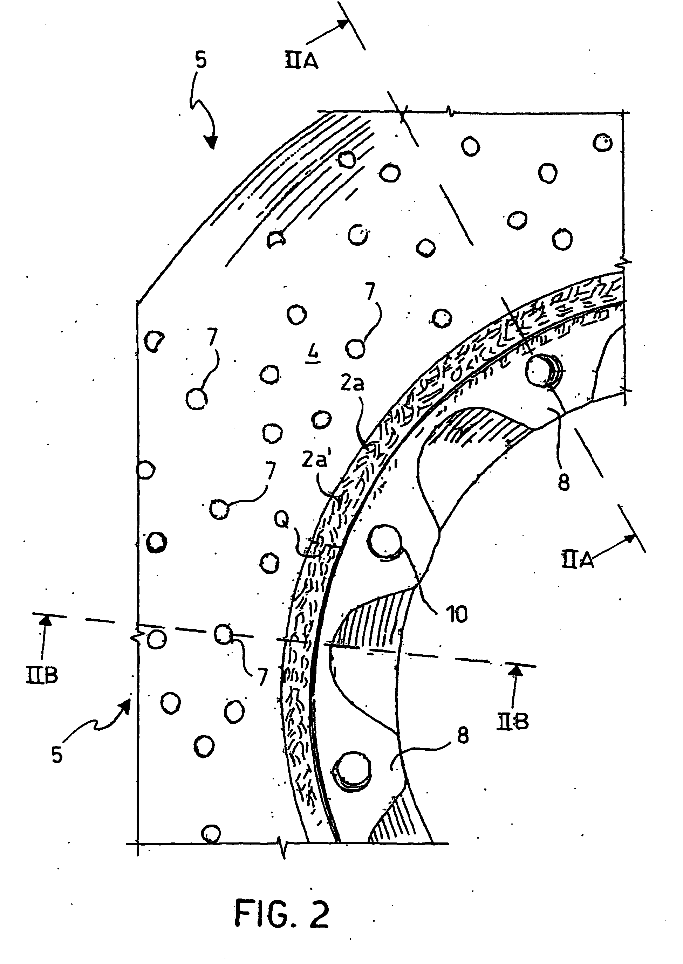

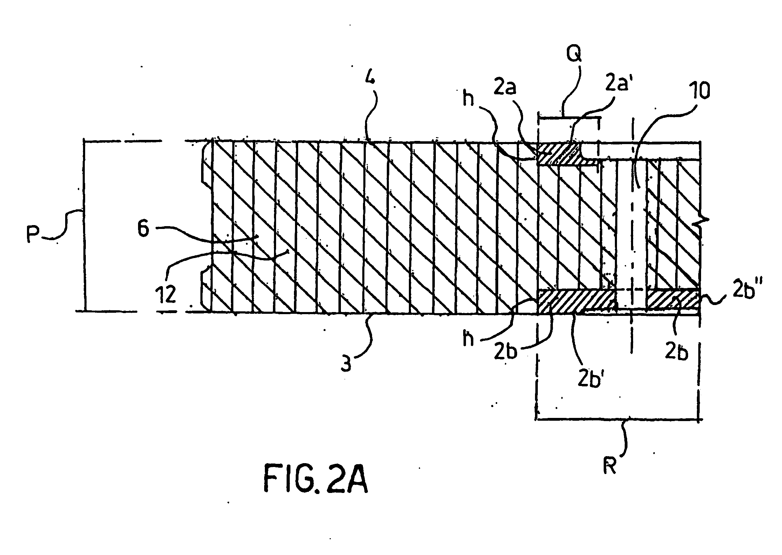

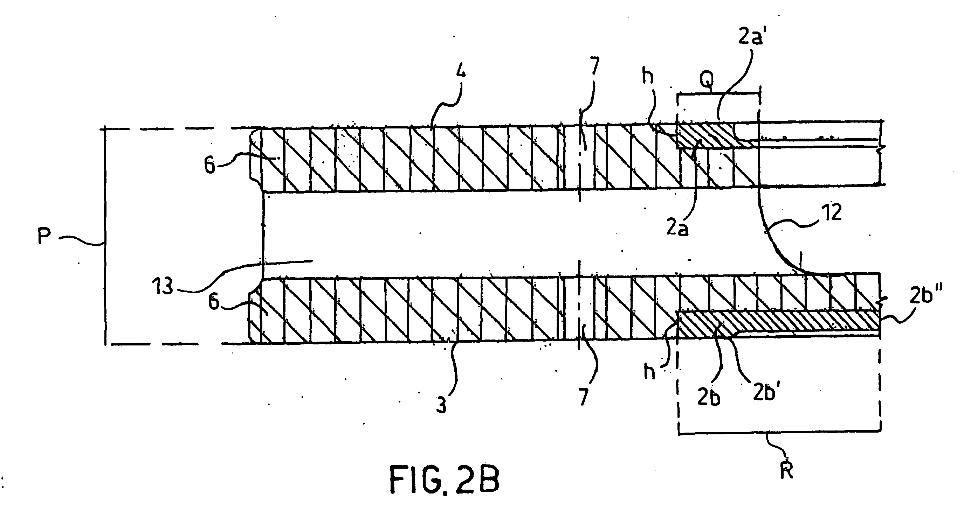

**.** Fig. 2 shows a view of a portion of the braking band according to an embodiment of the invention;

**.** Fig. 2A shows a sectional view of a detail of the band from Fig. 2, according to line IIA-IIA from Fig. 2;

**.** Fig. 2B shows a sectional view of a detail of the band from Fig. 2, according to line IIB-IIB from Fig. 2;

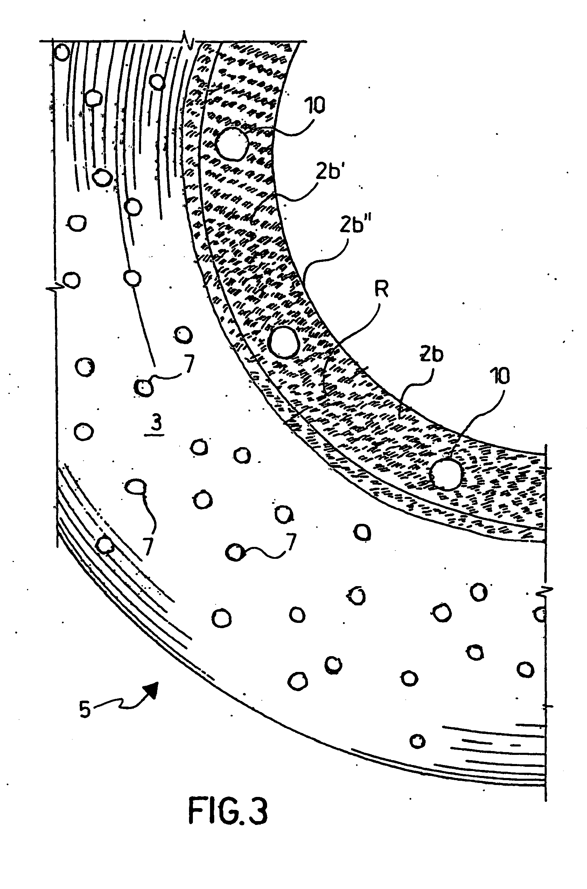

**.** Fig. 3 shows a view of the opposite side of the portion of the braking band illustrated in Fig. 2;

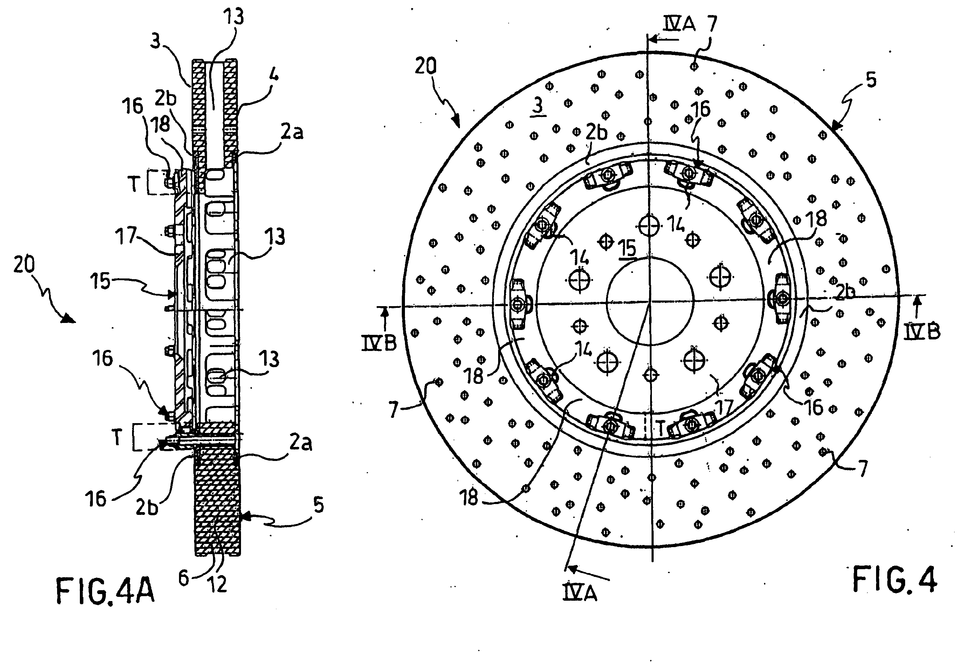

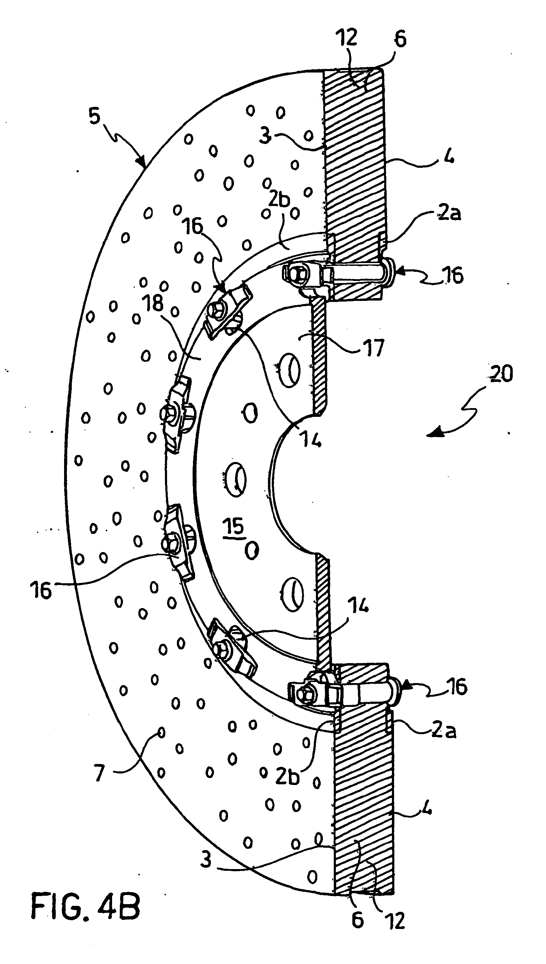

**.** Fig. 4 shows an axial view of an assembled disc;

. Fig. 4A shows a sectional view according to line IVA-IVA from Fig. 4;

. Fig. 4B shows a sectional perspective view according to line IVB-IVB from Fig. 4;

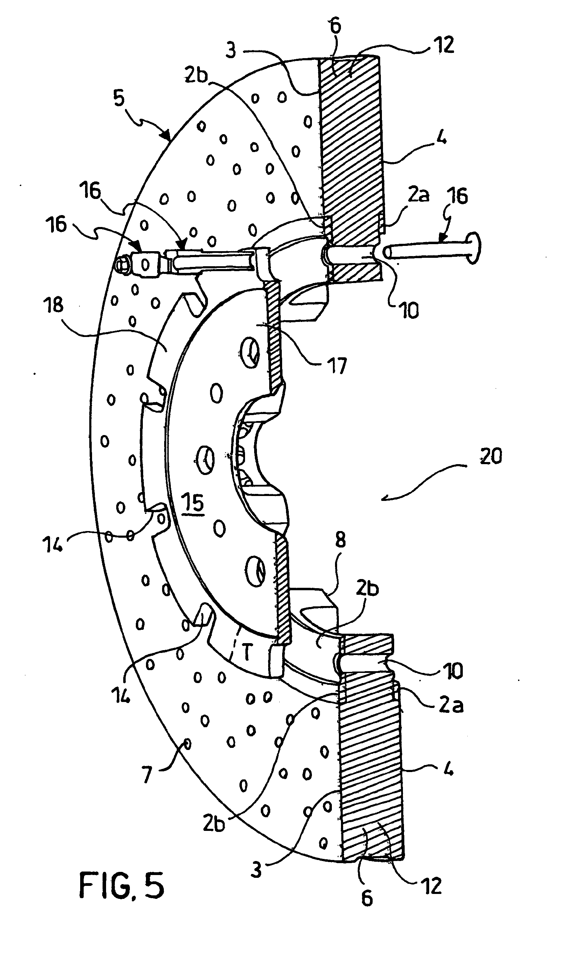

. Fig. 5 shows a cut-away schematic view from Fig. 4B.

**.** With reference to Fig. 1, number 1 generally indicates a sector of the strengthening ring according to the invention. This sector is of a circle-arc shape having thickness S and height h. The sector of ring 1 ends with a protuberance 1a and a recess 1b, of a shape which is complementary to the protuberance 1a, respectively, at the two opposite ends. The recess 1b is adapted such that the protuberance 1a of a second sector of ring 1 can be joint accommodated therein. On the contrary, the protuberance 1a is adapted to be fitted into the recess 1b of a third sector of ring 1. In other words, the protuberance 1a and recess 1b are used for connecting two or more ring sectors to one another, due to a joint which is similar to the one among the pieces of a puzzle, in order to provide the strengthening ring according to the invention.

. Advantageously, the strengthening ring comprises 5 ring sectors that are connected to one another according to the joint modes described above.

. Alternatively, the strengthening ring is provided as one piece without gap.

**.** Figs. 2 and 3 show the two opposite sides of a braking band which has been generally indicated with 5, comprising two strengthening rings, which have been generally indicated with 2a and 2b, respectively, according to a preferred embodiment of the invention.

. The braking band 5 has a body 6 being laterally defined by two braking surfaces 3 and 4 suitable to cooperate with disc brake calipers in order to exert a braking action on a vehicle. Said surfaces 3 and 4 are parallel to each other and define a body thickness therebetween, which has been indicated with P in Figs. 2A and 2B.

**.** The braking surfaces 3 and 4 have holes 7 allowing the air passing therethrough and hence disc cooling during the braking.

**.** With reference to Fig. 2, the braking band 5 also comprises a strengthening ring 2a. Said ring is incorporated into the braking band 5 so that the surface 2a' of the ring is at the same level of the braking surface 4, when the band is finished. The strengthening ring 2a has thickness Q and height h (such as shown in Figs. 2, 2A and 2B), and is placed near the inner edge of the braking band, particularly tightly close to the part of braking band 5 which has a round-teeth 8 shape.

**.** Each tooth 8 has at least one through hole 10. Said teeth 8 and through holes 10 are uniformly arranged near the inner edge of the braking band 5 with the same angular pitch of the radial recesses 14 being present on the support 15 in order to be aligned with these recesses and hence to house coupling means 16 for anchoring the braking band 5 to the support 15 (Figs. 4, 4A, 4B and 5).

. With reference to Fig. 3, the braking band 5 comprises a further strengthening ring 2b incorporated into the braking band 5 so that the surface 2b' of the ring is at the same level of the braking surface 3, when the band is finished. The strengthening ring 2b has thickness R and height h (such as shown in Figs. 2A, 2B and 3), and is located at the inner edge of the braking band, particularly the edge 2b" of the strengthening ring 2b corresponds to the inner edge of the band 5.

**.** The ring 2b comprises one or more through holes 10 which are used for housing the coupling means 16 required for anchoring the band 5 to the support 15 as explained above.

**.** With reference to Figs. 4, 4A, 4B and 5, the number 20 generally indicates the disc comprising a support 15 and a braking band 5 assembled by means of a plurality of coupling means 16. The support 15, being usually manufactured in light aluminium alloy, comprises a drilled flange 17 for fastening the disc to the wheel hub (not shown) and a peripheral ring 18 provided with a plurality of radial recesses 14 being uniformly arranged along the periphery thereof and aligned with the through holes 10 of the braking band 5 such as to house the coupling means 16 which are used for anchoring the support to the braking band. Said coupling means 16 are known in the art. One example thereof may be found in WO-A-03/001076 of the same applicant.

**.** The support 15 is coupled with the braking band so that the peripheral ring 18 is operatively connected to the strengthening ring 2b and the recesses 14 are aligned with the through holes 10, after the disc has been assembled, thus allowing the introduction of the coupling means 16.

**.** Particularly, after the disc has been assembled, the strengthening ring 2b is operatively connected to the peripheral ring 18 of the support 15. In other words, the strengthening ring 2b has thickness R which is greater than the thickness T of the peripheral ring 18 of the support 15.

**.** The connection area between two teeth is the part of braking band suffering the higher thermal and mechanical stresses during the braking and, for this reason, it is the portion in which the cracks have higher probability of being formed and spreading. The positioning of at least one strengthening ring in this area either avoids or considerably reduces the cracking and propagation thereof.

. Such as illustrated in Figs. 2A, 2B and 4A the body 6 of the braking band 5 has connecting elements or areas 12 which are advantageously alternated with air ducts 13. The latter allow the air to pass therethrough for cooling the disc during the braking, and are obtained by means of the introduction of suitable means for obtaining these ducts into the mould of the braking band, for example pins or tabs.

**.** Alternatively, the air ducts may be obtained by means of processing to be carried out either after the moulding of the preform or after the pyrolysis.

**.** However, the strengthening ring of the invention may also be used in the braking bands which are not provided with air ducts, i.e. in the non-ventilated braking bands.

**.** The strengthening ring according to the invention is in carbon-carbon material. For the objects of the invention, with "carbon-carbon material" is meant a material comprising graphitic carbon fibres immersed in an amorphous carbon matrix.

. The graphitic carbon fibres are obtained from a precursor material which is, preferably, polyacrylonitrile.

. The solution of polyacrylonitrile is transferred to the die such as to obtain filaments which are subjected to protracted heating at 220°C in an oxidizing atmosphere. Consequently, the fibres are carbonized at 1000-1500°C in an inert atmosphere and hence graphitized at 2000-3000°C. During these processes the fibres are tensioned such as to orientate the graphitic crystals and increase the resistance.

**.** Preferably, the thus-obtained fibres are joined in rovings of either parallel or twisted fibres. A certain amount of filaments may also be twisted as a strand and, therefore, the strands may be woven together to provide a bi-dimensional fabric.

**.** The thus-formed bi-dimensional fabric is impregnated with a binding resin, preferably a polymeric phenolic resin. Therefore, a stack of alternated layers of fabric with impregnation resin is formed, which is subjected to inert-atmosphere heating. The heating causes the polymerization of the resin which consequently acts as a bonding agent among the layers. The pyrolysis of the stack of bonded layers and, subsequently, a second impregnation with liquid resin and a polymerization autoclave treatment are then carried out. Finally, the preform is subjected to a final pyrolysis treatment. Optionally, the impregnation step of the stack of bonded layers, the autoclave treatment and pyrolysis can be repeated either once or several times.

**.** At the end of this process the carbon-carbon material is obtained, being advantageously of a tridimensional-sheet shape. This material has a good mechanical resistance and good specific elastic modulus which is maintained unchanged up to about 2300°C. Furthermore, it does not have a melting point because it sublimes at about 3300°C.

. The carbon-carbon material and the manufacturing process thereof are known in the art. To the purpose of the present invention any carbon-carbon material available on the market may be used. For example, the carbon-carbon material available from Schunk is used.

**.** The panel of carbon-carbon material is then cut in the shape which is adapted to be subsequently used in the braking band for disc brakes of the invention, as discussed above.

**.** The present invention also relates to a method for manufacturing a disc for disc brakes, comprising the steps of:
a) Inserting a strengthening ring into the empty mould for the disc;
b) Inserting a part of the mixture obtained by blending a predetermined amount of filament rovings essentially consisting of carbon and having a length which is not higher than 30 mm into the mould, with a predetermined amount of an organic binder;
c) Inserting means for obtaining the air ducts into the mould, when the product is finished;
d) Inserting the second part of the mixture obtained by blending a predetermined amount of filament rovings essentially consisting of carbon and having a length which is not higher than 30 mm into the mould, with a predetermined amount of an organic binder;
e) Forming a preform by means of moulding;
f) Subjecting said preform to a first baking at such a temperature as to substantially cause either the carbonization or pyrolysis of said organic binder;
g) Subjecting the baked preform to a second baking in the presence of silicon at such a temperature as to substantially cause the melting of said silicon and the infiltration of the latter into said preform.

. When the strengthening ring is desired to be embedded within the material forming the braking band, the following process will be carried out: the mixture of point b) is inserted into the mould, then the strengthening ring and finally the mixture of point d). Therefore, the subsequent moulding and baking steps will be carried out according to points e)-g). In other words, the step c) will not be carried out in this case and hence the finished band will not be provided with air ducts.

. In the step c), said means for obtaining the air ducts, when the product is finished, are known. An example of said means is described in WO-A-03/012311 of the same Applicant.

**.** During the pyrolysis and silicon infiltration steps, such as described in points f) and g) the strengthening ring, since it is of very compact material due to the repeated resin and pyrolysis infiltration treatments which tend to fill all the cavities, does not suffer substantial changes. Particularly, a least silicon infiltration occurs into the ring, but which does not entail substantial changes in the composition of the carbon-carbon material. On the contrary, the melted silicon reacts with the carbon contained in the mixture of filaments essentially consisting of carbon and binder, thereby providing SiC.

. Therefore, the finished band comprises a braking band made of C/SiC material and a strengthening ring made of carbon-carbon material. Advantageously, the strengthening ring is placed in the mould, at point a) of the process, so that it is at or near the band inner edge or circumference, when the band is finished.

**.** In a preferred embodiment of the invention, before the preform moulding step e), a second strengthening ring is inserted.

. In a further preferred embodiment, a plurality of reinforcing fibres is incorporated into the mixture comprising filaments essentially consisting of carbon and binders.

**.** The incorporation of the reinforcing fibres into the mixture may be carried out in different ways.

**.** According to a preferred embodiment, the reinforcing fibres are incorporated after step b), then the means for obtaining the air ducts and hence the second part of the mixture (step d)) are inserted. Thereby, the plurality of reinforcing fibres is completely covered before the subsequent steps e)-g).

**.** The reinforcing fibres can be added to the mixture in the form of a plurality of rovings which are arranged according to predetermined directions.

**.** These predetermined directions can be filling and warp directions, said rovings providing a fabric.

. The fabric may comprise 2 to 30 fibres per cm, preferably 5-8 fibres/cm.

. Alternatively, the reinforcing fibres may form a nonwoven fabric, for example a felt.

. The number of reinforcing fibres incorporated into the mixture is a function of the desired fibre content in the final composite material, said content ranging between 4-30% by volume on the volume of the material, preferably 10-20%.

**.** In the method according to the invention, the filament rovings may have a diameter 0,1 to 2 mm, preferably 0,3 to 0,5 mm.

**.** The filament rovings content in the mixture may vary from 50% to 80% by volume on the volume of the mixture and preferably ranges between 60% - 70%.

**.** Advantageously, the filament rovings and/or the reinforcing fibres can be previously covered with a protective resin, preferably polyurethane, before they are employed in accordance with the method of the invention.

**.** Alternatively, the filament rovings and the reinforcing fibres can be previously covered with the same organic binder used for preparing the mixture.

**.** Thereby, a higher cohesion of the material and a more compact product are obtained.

**.** During the first baking of the preform, the resin and the organic binder carbonize, thus creating a protective layer on the filament rovings and the reinforcing fibres, and thus preventing a possible disgregation or even a dissolution thereof in the subsequent silicon treatment.

**.** Thereby, the filament rovings and the reinforcing fibres maintain the original shape throughout the process, thus obtaining a material with good cohesion and resistance characteristics.

**.** The organic binder is a traditional binder which may be selected from the group comprising phenolic and acrylic resins, paraffin, pitch, polystyrenes etc.

**.** Preferably, the binder is selected from the group comprising pitch and phenolic resins.

**.** The binder can be added to the mixture in any desired form for example at the solid, semi-liquid, liquid or solution state.

. For example, the phenolic resin may be added in the form of pellets, powder or grains.

. The organic binder content in the mixture may vary from 5% to 30% by volume on the volume of the mixture and preferably ranges between 20% - 26% by volume.

. The mixture can also contain other traditional additives used as fillers and, indirectly, in order to adjust the porosity and density of the desired composite material.

**.** These additives consist of inorganic material particles such as preferably powdered graphite, silicon carbide, metal carbides and nitrides.

**.** The additive content in the mixture may vary from 0,7% to 23% by volume on the volume of the mixture and preferably ranges between 9% -15%.

**.** The mixing can be traditionally carried out and with traditional equipment and said filament rovings will be accidentally arranged in the different directions.

**.** In the moulding step of the inventive method, the mixture optionally comprising the reinforcing fibres, is heated in the mould at a temperature from 80°C to 180°C, preferably 100-120°C and a pressure ranging between 0,1N/cm² and 5N/cm², preferably 0,5-1N/cm² is applied thereon.

**.** The thus-obtained shaped and compact preform is extracted from the mould, following the removal of the means for providing the air ducts, and hence is subjected to a first baking such as to carbonize the organic binder (step f, pyrolysis).

**.** This baking is carried out in a traditional furnace at a temperature substantially dependent on the type of binder used and generally ranging between 900 - 1200 °C.

. The baking is carried out in the presence of an inert gas flow such as nitrogen or argon and in an overpressure of 10-100 mbar, preferably 20 - 30 mbar.

**.** Said inert gas flow also advantageously allows the gases which are released from the pyrolysis of the organic binder to be removed.

**.** During this step of the process, the preform acquires a higher porosity which is important in the subsequent baking because it allows the melted silicon to infiltrate thereinto. On the other hand, as explained above, the strengthening ring does not suffer any substantial change either during the pyrolysis step f), or during the subsequent silicon infiltration step, because the carbon-carbon material by which it is formed is a very compact and highly resistant material at very high temperatures.

**.** According to an embodiment of the invention, the method may further comprise a finishing step of the surface of the preform from the first baking of step f.

**.** This advantageously allows possible surface deformations of the preform to be removed by traditional equipment such as to produce the desired shape of the latter.

. The finishing operation is preferably carried out by dry process, for example with diamond, because the preform, which has acquired a certain porosity after the baking, could disadvantageously absorb liquid substances if the finishing is carried out by wet process.

**.** The pyrolised preform in accordance with step f) is subjected to a second baking in the presence of silicon (step g).

**.** In order to carry out the second baking, the preform, baked and optionally subjected to finishing, is inserted into the chamber of a container the volume of which is about double relative to the volume of the preform, thus filling the gap being formed between the preform and the container with silicon that envelopes the preform. Therefore, the amount of silicon used is the required one, or little larger, for filling the preform porosity.

**.** In order to fill said gap, pure silicon is used, or an aluminium-silicon or copper alloy, either in grains or powder.

**.** The chamber may be in communication with the outside by means of suitable holes allowing the gases released during the baking to leak out.

**.** After the silicon has been loaded, the container is inserted into a suitable furnace, which is traditional per se, heated at a temperature of 1400-1700°C.

**.** At said temperatures, the silicon melts and infiltrates into the pores of the preform (Silication). The silicon only partially infiltrates into the strengthening ring.

**.** This baking is carried out by the vacuum method by reducing the pressure from 900 mbar to 300 mbar, preferably from 800 to 500 mbar.

**.** At the end of the baking the material is cooled for example with argon or, preferably, with nitrogen, such that the residual silicon solidifies in small balls to be easily recovered by the container.

**.** Optionally, the thus-obtained braking band according to the invention may be subjected to finishing operations, for example surface finishing, which can be traditionally carried out either by dry or wet process.

. It is understood that the baking steps, i.e. pyrolysis and silication, could be carried out in a single furnace, thus allowing to reduce the time and complexity of the manufacturing equipment.

**.** Said finishing operations, in accordance with an embodiment, may be provided following any of the above-mentioned treatments.

. In accordance with a further embodiment, the method for manufacturing a disc for brakes comprises, before step a), the following steps:
a1) providing a sheet of carbon-carbon material manufactured as described above;
a2) cutting two or more circle-arc-shaped sectors 1 as described above,
a3) joining said two or more sectors of point a2) such as to obtain the strengthening ring.

**.** In step a3), the junction between the sectors 1 is carried out with a joint mode as described above in detail. Preferably, five sectors 1 are cut and hence joined together.

**.** Alternatively, in step a2) a single ring-shaped piece is cut without gap, which is directly inserted into the mould. In this case, step a3) is not carried out.

**.** The disc according to the invention is provided with a braking band which is distinguished for the excellent characteristics of friction, hardness and resistance to bending, wear, friction-generated temperature, impact and compression and at least one strengthening ring, which is located at the point from which the cracks start, in carbon-carbon material characterized by high hardness and stress resistance. The position of the strengthening ring and the inherent characteristics of the carbon-carbon material minimize the formation of cracks and particularly the propagation thereof in the disc.

**.** This causes a high use safety of the disc of the invention, because possible cracks or breaks which may occur thereon during the use do not involve the total structure disgregation because the propagation thereof is avoided by the provision of the strengthening ring.

**.** A further advantage of the composite material according to the invention is also that it can be carried out in a simple and cost-effective manner, such that considerable extra charges and very expensive equipment are not required.

**.** In fact, it shall be noted that the disc according to the invention can be manufactured with the aid of the traditional technologies applied to the manufacturing of the corresponding known discs.

. The characteristics and the advantages of the present invention will be better understood from the following description of an exemplary preparation of a shaped composite material according to the invention, said description being given by way of indicative and non limiting example.

. EXAMPLE

. A mixture containing, by volume percentage on the volume of the mixture, 65% of carbon filament rovings having a diameter 0,3 mm to 0,5 mm and a length 5 mm to 10 mm, 23% of dry phenolic resin and 12% of silicon carbide powder is traditionally prepared in a mixer, known as the Erigh mixer.

**.** The mixing causes a random distribution of the filament rovings.

**.** From a panel of carbon-carbon material of the firm Schunk 5 circle-arc shapes having a protuberance and a recess at the opposite ends, respectively, are cut, the latter being of a shape which is complementary to the protuberance and adapted to house the latter. The 5 circle arcs are joint connected to one another such as to provide the strengthening ring, having 241x217 mm in size.

**.** The strengthening ring is inserted into an annular mould of 150 mm in inner diameter, 380 mm in outer diameter and 210 mm in height, centred relative to the axis, and located so that it is near the inner edge of the braking band and, particularly, at 1 mm distance from the inner edge, when the band is finished.

**.** A portion of the mixture is then placed in the mould cavity.

**.** About 30 pins are inserted into the mould, in a radial position, spaced from one another by 40 mm.

. Therefore, a second portion of mixture is added up to fill the mould and, finally, a second strengthening ring, obtained as the first ring from the junction of 5 circle arcs, but having 241x176 mm in size.

**.** The second ring is positioned centred relative to the axis and such that the inner edge thereof coincides and form the band inner edge.

**.** Then, the shaping is carried out by heating the mould at a temperature of 120°C and applying a pressure equal to 1 N/cm², thus obtaining a ring-shaped blank body.

**.** The blank band, after it has been extracted from the mould and after the pins have been removed, is subjected to baking in a furnace heated at a temperature of 1100°C for a stopping time of 12 hours.

**.** The baking is carried out at a pressure of 30 mbar and in an inert atmosphere due to the presence of argon, conveyed into the furnace with a flow of 30 litres/minute.

**.** After baking, said band is traditionally subjected to a diamond finishing by dry process in order to remove surface deformations.

. At this point, the blank band is placed in a container provided with holes in order to allow the gas leakage.

. The container is loaded with grain silicon in the amount required for filling the hollow space formed between the band and the container.

**.** The container is then transferred to a furnace which is heated at the temperature of 1500°C and is caused to stop in this furnace for an 8-hour time.

**.** The baking is carried out at a reduced pressure of 700 mbar to which a cooling in the furnace with a continuous nitrogen blowing is followed.

**.** Therefore, a band which is traditionally subjected to diamond finishing after cooling such as to remove the surface deformations and to obtain the final shape, with the desired accuracy and tolerance is obtained.

**.** The composite material composition of the disc braking band by volume percentage on the volume of the material is the following: 55% filament rovings, 10% additives, 15% reinforcing fibres and 20% of products deriving from the binder carbonization.

**.** The disc comprising the thus-obtained braking band has been tested as a component of a disc brake for vehicles and exhibited excellent hardness, impact-resistance, wear, compression, friction-generated temperature characteristics during the braking.

**.** Particularly, said disc has not exhibited the presence of cracks.

**.** To the preferred embodiment solution to the ceramic composite material described above, those skilled in the art, aiming at satisfying contingent and specific needs, will be able to carry out several modifications, adjustments and replacements of elements with others being functionally equivalent thereto, without departing from the scope of the claims below.

## Claims

1. A disc (20) for disc brakes, comprising a support (15) and a braking band (5) suitable to cooperate with brake calipers in order to exert a braking action on a vehicle, said braking band comprising a shaped body (6) extending around a symmetry axis and being laterally defined by braking surfaces (3; 4), said braking band (5) being made of composite material which can be obtained by the interaction of a mixture, comprising filament rovings, essentially consisting of carbon, which are randomly arranged and have sizes not greater than 30 mm, with silicon at a temperature sufficient to cause the melting of said silicon, **characterized in that** the disc further comprises at least one strengthening ring (2a,2b) in carbon-carbon material that is located near or at the cracking point.

2. The disc according to claim 1, wherein said at least one strengthening ring is located at the level of at least one braking surface.

3. The disc according to claim 2, wherein said at least one strengthening ring is operatively connected to the support, after the disc has been assembled.

4. The disc according to claim 1, wherein said at least one strengthening ring is included within the braking band at or near the band inner edge.

5. The disc according to any claim 1 to 4, comprising two strengthening rings (2a; 2b).

6. The disc according to claim 5, wherein the surfaces (2a' and 2b') of said two strengthening rings (2a and 2b) are at the same level of the two braking surfaces (4 and 3), respectively.

7. The disc according to claim 5 or 6, wherein said strengthening ring (2a) is set near the inner edge of the braking band (5).

8. The disc according to any claim 5 to 7, wherein said strengthening ring (2a) is positioned tightly close to the part of braking band (5) which has a round-teeth shape (8).

9. The disc according to any claim 5 to 8, wherein said strengthening ring (2b) is set at the inner edge of the braking band (5).

10. The disc according to any claim 5 to 9, wherein the edge (2b") of said strengthening ring (2b) corresponds to the inner edge of the braking band (5).

11. The disc according to any claim 5 to 10, wherein said strengthening ring (2b) is set at the level of the braking surface (3) such that it is operatively connected to the peripheral ring (18) of the support (15), after the disc has been assembled.

12. The disc according to claim 11, wherein said strengthening ring (2b) is partly operatively connected to the peripheral ring (18) of the support (15).

13. The disc according to any claim 1 to 12, wherein said at least one strengthening ring is provided as one piece without gap.

14. The disc according to any claim 1 to 13, wherein said at least one strengthening ring is formed by one or more sectors (1) having a circle-arc shape and joint connected to one another.

15. The disc according to claim 14, wherein said at least one strengthening ring consists of five sectors (1) having a circle-arc shape and joint connected to one another.

16. The disc according to claim 14 or 15, wherein each sector ends with a protuberance (1a) and a recess (1b), of a shape which is complementary to the protuberance (1a), at the opposite ends.

17. The disc according to claim 16, wherein said recess (1b) of a sector (1) is adapted to joint accommodate said protuberance (1a) of another sector (1).

18. The disc according to any claim 1 to 17, wherein said carbon-carbon material of the strengthening ring is a material comprising graphitic carbon fibres immersed in an amorphous carbon matrix.

19. The disc according to claim 18, wherein said graphitic carbon fibres are polyacrylonitrile fibres and said amorphous carbon matrix is a polymeric phenolic resin.

20. The disc according to any claim 1 to 19, wherein said braking band (5) is in ceramic composite material C/SiC.

21. The disc according to claim 20, wherein said composite material C/SiC comprises reinforcing fibres.

22. The disc according to any claim 1 to 21, wherein said support (15) is in light aluminium alloy.

23. A method for preparing the braking band (5) of the disc according to any claim 1 to 23 comprising the steps of:
a) Inserting a strengthening ring into the empty mould for the disc;
b) Inserting a part of the mixture obtained by blending a predetermined amount of filament rovings essentially consisting of carbon and having a length which is not higher than 30 mm into the mould, with a predetermined amount of an organic binder;
c) Inserting means for obtaining the air ducts into the mould, when the product is finished;
d) Inserting the second part of the mixture obtained by blending a predetermined amount of filament rovings essentially consisting of carbon and having a length which is not higher than 30 mm into the mould, with a predetermined amount of an organic binder;
e) Forming a preform by means of moulding;
f) Removing the means of step j;
g) Subjecting said preform to a first baking at such a temperature as to substantially cause either the carbonization or pyrolysis of said organic binder;
h) Subjecting the baked preform to a second baking in the presence of silicon at such a temperature as to substantially cause the melting of said silicon and the infiltration of the latter into said preform.

24. The method according to claim 23, wherein a second strengthening ring is inserted, before the preform moulding step e).

25. The method according to claim 23 or 24, wherein said filament rovings essentially consisting of carbon have a diameter ranging between 0,1 and 2 mm, preferably 0,3 and 0,5 mm and are included in the mixture in amounts from 50% to 80% by v/v, preferably between 60% and 70% v/v.

26. The method according to any claim 23 to 25, wherein said binder is selected from the group comprising: phenolic and acrylic resins, paraffin, pitch, polystyrene, preferably pitch and phenolic resins.

27. The method according to any claim 23 to 26, wherein said binder is included in the mixture in amounts from 5% to 30% v/v, preferably from 20% to 26% v/v.

28. The method according to any claim 23 to 27, wherein the preform is subjected to a finishing treatment, after the pyrolysis step g).

29. The method according to any claim 23 to 28, wherein the braking band is subjected to a finishing treatment either by dry or wet process, after step h).

30. The method according to claim 28 or 29, wherein said finishing treatments may be carried out after each step a)-h) of the method according to claim 24.

31. The method according to any claim 23 to 30, wherein reinforcing fibres arranged according to predetermined directions in amounts of 4-30% v/v, preferably 10-20% v/v, are added after step b).

32. The method according to claim 33, wherein the mixture of step b) is inserted into the mould; thus the strengthening ring of step a) and finally the mixture of step d) are inserted such as to obtain a braking band with the strengthening ring which is included therein, when the product is finished.

33. The method according to claim 32, wherein step c) is not carried out.

34. The method according to claim 33, wherein before step a) it comprises the following steps of:
a1) providing a sheet of carbon-carbon material;
a2) cutting two or more sectors (1) as a circle-arc shape;
a3) joining said two or more sectors of point a2) such as to obtain the strengthening ring.

35. The method according to claim 34, wherein two or more sectors are joined together, preferably five sectors.

36. The method according to claim 34, wherein in step a2) a single piece is cut without gap, with a ring shape, which is directly inserted into the mould and step a3) is not carried out.

## Patentansprüche

1. Scheibe (20) für Scheibenbremsen, mit einem Träger (15) und einem Bremsbereich bzw. -streifen (5), der zum Zusammenwirken mit Bremsbacken geeignet ist, um eine Bremswirkung auf ein Fahrzeug auszuüben, wobei der Bremsbereich einen Formkörper (6) aufweist, der sich um eine Symmetrieachse herum erstreckt und seitlich von Bremsflächen (3;4) festgelegt ist, wobei der Bremsbereich (5) aus Verbundmaterial hergestellt ist, welches durch die Interaktion eines Gemischs, das im wesentlichen aus Kohlenstoff bestehende Filament-Rovings umfasst, die zufällig angeordnet sind und Größen von nicht mehr als 30 mm aufweisen, mit Silikon bei einer Temperatur erhalten wird, die ausreicht, um das Schmelzen des Silikons zu bewirken,
**dadurch gekennzeichnet, dass** die Scheibe ferner mindestens einen Verstärkungsring (2a,2b) aus Kohlenstoff-Kohlenstoff-Material umfasst, der sich nahe oder an dem Cracking-Punkt befindet, umfasst.

2. Scheibe nach Anspruch 1, wobei der mindestens eine Verstärkungsring sich auf der Höhe mindestens einer Bremsfläche befindet.

3. Scheibe nach Anspruch 2, wobei der mindestens eine Verstärkungsring funktionsmäßig mit dem Träger verbunden ist, nachdem die Scheibe montiert wurde.

4. Scheibe nach Anspruch 1, wobei der mindestens eine Verstärkungsring in dem Bremsbereich an oder nahe der Bereichs-Innenkante aufgenommen ist.

5. Scheibe nach einem der Ansprüche 1 bis 4, mit zwei Verstärkungsringen (2a;2b).

6. Scheibe nach Anspruch 5, wobei sich die Oberflächen (2a' und 2b') der zwei Verstärkungsringe (2a und 2b) jeweils auf der gleichen Höhe der beiden Bremsflächen (4 und 3) befinden.

7. Scheibe nach Anspruch 5 oder 6, wobei der Verstärkungsring (2a) nahe der Innenkante des Bremsbereichs (5) eingesetzt ist.

8. Scheibe nach einem der Ansprüche 5 bis 7, wobei der Verstärkungsring (2a) dicht an dem Teil des Bremsbereichs (5) positioniert ist, der eine Rundzahnform (8) hat.

9. Scheibe nach einem der Ansprüche 5 bis 8, wobei der Verstärkungsring (2b) an der Innenkante des Bremsbereichs (5) eingesetzt ist.

10. Scheibe nach einem der Ansprüche 5 bis 9, wobei die Kante (2b') des Verstärkungsrings (2b) der Innenkante des Bremsbereichs (5) entspricht.

11. Scheibe nach einem der Ansprüche 5 bis 10, wobei der Verstärkungsring (2b) auf die Höhe der Bremsfläche (3) so eingesetzt ist, dass er funktionsmäßig mit dem Umfangsring (18) des Trägers (15) verbunden ist, nachdem die Scheibe montiert wurde.

12. Scheibe nach Anspruch 11, wobei der Verstärkungsring (2b) teilweise funktionsmäßig mit dem Umfangsring (18) des Trägers (15) verbunden ist.

13. Scheibe nach einem der Ansprüche 1 bis 12, wobei der mindestens eine Verstärkungsring als einteiliges Stück ohne Zwischenraum vorgesehen ist.

14. Scheibe nach einem der Ansprüche 1 bis 13, wobei der mindestens eine Verstärkungsring durch einen oder mehrere Sektoren (1) gebildet ist, die eine Kreisbogenform haben und am Stoß miteinander verbunden sind.

15. Scheibe nach Anspruch 14, wobei der mindestens eine Verstärkungsring aus fünf Sektoren (1) besteht, die eine Kreisbogenform haben und am Stoß miteinander verbunden sind.

16. Scheibe nach Anspruch 14 oder 15, wobei jeder Sektor mit einem Vorsprung (1a) und einer Ausnehmung (1b) einer Form, die komplementär zu dem Vorsprung (1a) ist, an den gegenüberliegenden Enden endet.

17. Scheibe nach Anspruch 16, wobei die Ausnehmung (1b) eines Sektors (1) so ausgelegt ist, dass sie den Vorsprung (1a) eines anderen Sektors (1) als Stoßverbindung aufnehmen kann.

18. Scheibe nach einem der Ansprüche 1 bis 17, wobei das Kohlenstoff-Kohlenstoff-Material des Verstärkungsrings ein Material ist, das Graphit-Kohlenstofffasern aufweist, die in eine amorphe Kohlenstoffmatrix eingetaucht sind.

19. Scheibe nach Anspruch 18, wobei die Graphit-Kohlenstofffasern Polyacrylonitrilfasern sind, und die amorphe Kohlenstoffmatrix ein Polymer-Phenolharz ist.

20. Scheibe nach einem der Ansprüche 1 bis 19, wobei der Bremsbereich (5) aus keramischem C/SiC-Verbundmaterial ausgeführt ist.

21. Scheibe nach Anspruch 20, wobei das C/SiC-Verbundmaterial Verstärkungsfasern aufweist.

22. Scheibe nach einem der Ansprüche 1 bis 21, wobei der Träger (15) aus leichter Aluminiumlegierung ausgeführt ist.

23. Verfahren zur Herstellung des Bremsbereichs (5) der Scheibe gemäß einem der Ansprüche 1 bis 23, mit den folgenden Schritten:
a) Einsetzen eines Verstärkungsrings in die leere Form für die Scheibe,
b) Einsetzen eines Teils des durch Vermischen einer vorbestimmten Menge von Filament-Rovings, die im wesentlichen aus Kohlenstoff bestehen und eine Länge aufweisen, die nicht größer ist als 30 mm, erhaltenen Gemischs in die Form mit einer vorbestimmten Menge eines organischen Binders erhalten wird,
c) Einsetzen von Mitteln zum Erhalten der Luftkanäle in die Form, wenn das Erzeugnis fertiggestellt ist,
d) Einsetzen des zweiten Teils des durch Vermischen einer vorbestimmten Menge von im wesentlichen aus Kohlenstoff bestehenden Filament-Rovings mit einer Länge, die nicht größer als 30 mm ist, erhaltenen Gemischs in die Form mit einer vorbestimmten Menge eines organischen Binders,
e) Ausbilden einer Vorform mittels Formens ("moulding"),
f) Entfernen des Mittels von Schritt j,
g) Unterziehen der Vorform einem ersten Backvorgang bei einer solchen Temperatur, dass im wesentlichen entweder die Verkohlung oder die Pyrolyse des organischen Binders bewirkt wird,
h) Unterziehen der gebackenen Vorform einem zweiten Backvorgang bei Präsenz von Silikon bei einer solchen Temperatur, dass im wesentlichen das schmelzen des Silikons und die Infiltration des letzteren in die Vorform bewirkt wird.

24. Verfahren nach Anspruch 23, wobei ein zweiter Verstärkungsring vor dem Vorform-Formungsschritt e) eingesetzt wird.

25. Verfahren nach Anspruch 23 oder 24, wobei die Filament-Rovings im wesentlichen aus Kohlenstoff mit einem Durchmesser bestehen, der zwischen 0,1 und 2 mm, vorzugsweise 0,3 und 0,5 mm liegt, und die in das Gemisch in Mengen von 50% bis 80% v/v, vorzugsweise zwischen 60% und 70% v/v aufgenommen werden.

26. Verfahren nach einem der Ansprüche 23 bis 25, wobei der Binder aus der Gruppe ausgewählt ist, die umfasst: Phenol- und Acryl-Harze, Paraffin, Pech, Polystyrol, vorzugsweise Pech und Phenolharze.

27. Verfahren nach einem der Ansprüche 23 bis 26, wobei der Binder in das Gemisch in Mengen von 5% bis 30% v/v, vorzugsweise von 20% bis 26% v/v aufgenommen wird.

28. Verfahren nach einem der Ansprüche 23 bis 27, wobei die Vorform einer Endbearbeitung nach dem Pyrolyseschritt g) unterzogen wird.

29. Verfahren nach einem der Ansprüche 23 bis 28, wobei der Bremsbereich einer Endbearbeitung entweder durch einen Trocken- oder Nassprozess nach Schritt h) unterzogen wird.

30. Verfahren nach Anspruch 28 oder 29, wobei die Endbearbeitungen nach jedem Schritt a) bis h) des Verfahrens gemäß Anspruch 24 durchgeführt werden können.

31. Verfahren nach einem der Ansprüche 23 bis 30, wobei Verstärkungsfasern, die entsprechend vorbestimmten Richtungen in Mengen von 4 - 30% v/v, vorzugsweise von 10 - 20% v/v angeordnet sind, nach Schritt b) zugesetzt werden.

32. Verfahren nach Anspruch 33, wobei das Gemisch von schritt b) in die Form eingegeben wird, womit der Verstärkungsring von Schritt a) und schließlich das Gemisch von Schritt d) so eingegeben werden, dass ein Bremsbereich mit dem darin enthaltenen Verstärkungsring erhalten wird, wenn das Produkt fertiggestellt ist.

33. Verfahren nach Anspruch 32, wobei Schritt c) nicht ausgeführt wird.

34. Verfahren nach Anspruch 33, wobei vor dem Schritt a) dieses die folgenden Schritte umfasst:
a1) Bereitstellen einer Lage aus Kohlenstoff-Kohlenstoff-Material,
a2) Zuschneiden zweier oder mehrerer Sektoren (1) in Kreisbogenform,
a3) Verbinden der zwei oder mehreren Sektoren von Punkt a2) derart, dass der Verstärkungsring erhalten wird.

35. Verfahren nach Anspruch 34, wobei zwei oder mehrere Sektoren, vorzugsweise fünf Sektoren, zusammengefügt werden.

36. Verfahren nach Anspruch 34, wobei im Schritt a2) ein einstückiges Teil ohne Zwischenraum mit einer Ringform ausgeschnitten wird, das direkt in die Form eingesetzt wird, und Schritt a3) nicht durchgeführt wird.

## Revendications

1. Disque (20) pour freins à disque, comportant un support (15) et un ruban (5) de freinage apte à coopérer avec des étriers de frein afin d'exercer une action de freinage sur un véhicule, ledit ruban de freinage comportant un corps configuré (6) s'étendant autour d'un axe de symétrie et défini latéralement par des surfaces de freinage (3 ; 4), ledit ruban de freinage (5) étant formé d'un matériau composite qui peut être obtenu par l'interaction d'un mélange, comprenant des mèches de filaments, constituées essentiellement de carbone, qui sont agencées de façon aléatoire et ont des tailles ne dépassant pas 30 mm, avec du silicium à une température suffisante pour provoquer la fusion dudit silicium, **caractérisé en ce que** le disque comporte en outre au moins un anneau de renfort (2a, 2b) en matériau carbone-carbone qui est placé proximité du point de dissociation ou au point de dissociation.

2. Disque selon la revendication 1, dans lequel ledit au moins un anneau de renfort est placé au niveau d'au moins une surface de freinage.

3. Disque selon la revendication 2, dans lequel ledit au moins un anneau de renfort est relié fonctionnellement au support, après que le disque a été assemblé.

4. Disque selon la revendication 1, dans lequel ledit au moins anneau de renfort est inclus dans le ruban de freinage, au bord intérieur ou à proximité du bord intérieur du ruban.

5. Disque selon l'une quelconque des revendications 1 à 4, comportant deux anneaux de renfort (2a ; 2b)

6. Disque selon la revendication 5, dans lequel les surfaces (2a' et 2b') desdits deux anneaux de renfort (2a et 2b) sont au même niveau que les deux surfaces de freinage (4 et 3), respectivement.

7. Disque selon la revendication 5 ou 6, dans lequel ledit anneau de renfort (2a) est placé à proximité du bord intérieur du ruban de freinage (5).

8. Disque selon l'une quelconque des revendications 5 à 7, dans lequel ledit anneau de renfort (2a) est positionné étroitement contre la partie du ruban de freinage (5) qui a une forme (8) de dent arrondie.

9. Disque selon l'une quelconque des revendications 5 à 8, dans lequel ledit anneau (2b) de renfort est placé au bord intérieur du ruban (5) de freinage.

10. Disque selon l'une quelconque des revendications 5 à 9, dans lequel le bord (2b") dudit anneau (2b) de renfort correspond au bord intérieur du ruban (5) de freinage.

11. Disque selon l'une quelconque des revendications 5 à 10, dans lequel ledit anneau (2b) de renfort est placé au niveau de la surface de freinage (3) de manière qu'il soit relié fonctionnellement à l'anneau périphérique (18) du support (15) après que le disque a été assemblé.

12. Disque selon la revendication 11, dans lequel ledit anneau (2b) de renfort est relié fonctionnellement partiellement à l'anneau périphérique (18) du support (15).

13. Disque selon l'une quelconque des revendications 1 à 12, dans lequel ledit au moins un anneau de renfort est prévu en une seule pièce sans espace.

14. Disque selon l'une quelconque des revendications 1 à 13, dans lequel ledit au moins un anneau de renfort est formé par un ou plusieurs secteurs (1) ayant la forme d'un arc de cercle et assemblés les uns aux autres.

15. Disque selon la revendication 14, dans lequel ledit au moins un anneau de renfort est constitué de cinq secteurs (1) ayant la forme d'un arc de cercle et assemblés les uns aux autres.

16. Disque selon la revendication 14 ou 15, dans lequel chaque secteur se termine par une protubérance (1a) et un évidement (1b) d'une forme qui est complémentaire de celle de la protubérance (1a), aux extrémités opposées.

17. Disque selon la revendication 16, dans lequel ledit évidement (1b) d'un secteur (1) est conçu pour loger en formant un joint ladite protubérance (1a) d'un autre secteur (1).

18. Disque selon l'une quelconque des revendications 1 à 17, dans lequel ledit matériau carbone-carbone de l'anneau de renfort est un matériau comprenant des fibres de carbone graphitique immergées dans une matrice de carbone amorphe.

19. Disque selon la revendication 18, dans lequel lesdites fibres de carbone graphitique sont des fibres de polyacrylonitrile et ladite matrice de carbone amorphe est une résine phénolique polymère.

20. Disque selon l'une quelconque des revendications 1 à 19, dans lequel ledit ruban (5) de freinage est en un matériau composite céramique C/SiC.

21. Disque selon la revendication 20, dans lequel ledit matériau composite C/SiC comprend des fibres de renfort.

22. Disque selon l'une quelconque des revendications 1 à 21, dans lequel ledit support (15) est en alliage d'aluminium léger.

23. Procédé de préparation du ruban (5) de freinage du disque selon l'une quelconque des revendications 1 à 23, comprenant les étapes qui consistent :
a) à introduire un anneau de renfort dans le moule vide pour le disque ;
b) à introduire une partie du mélange obtenu en mélangeant une quantité prédéterminée de mèches de filaments constituées essentiellement de carbone et ayant une longueur qui n'est pas supérieure à 30 mm, dans le moule, avec une quantité prédéterminée d'un liant organique ;
c) à introduire un moyen pour obtenir les canaux d'air dans le moule, lorsque le produit est fini ;
d) à introduire la seconde partie du mélange obtenu en mélangeant une quantité prédéterminée de mèches de filaments constituées essentiellement de carbone et ayant une longueur qui n'est pas supérieure à 30 mm, dans le moule, avec une quantité prédéterminée d'un liant organique ;
e) à former une préforme au moyen d'un moulage ;
f) à enlever les moyens de l'étape j ;
g) à soumettre ladite préforme à une première cuisson à une température telle qu'elle provoque sensiblement la carbonisation ou la pyrolyse dudit liant organique ;
h) à soumettre la préforme cuite à une seconde cuisson en présence de silicium à une température telle qu'elle provoque sensiblement la fusion dudit silicium et l'infiltration de ce dernier dans ladite préforme.

24. Procédé selon la revendication 23, dans lequel un second anneau de renfort est introduit avant l'étape e) de moulage de la préforme.

25. Procédé selon la revendication 23 ou 24, dans lequel lesdites mèches de filaments constituées essentiellement de carbone ont un diamètre allant de 0,1 à 2 mm, avantageusement de 0,3 à 0,5 mm, et sont incluses dans le mélange en quantités de 50 à 80 % en volume, avantageusement entre 60 et 70 % en volume.

26. Procédé selon l'une quelconque des revendications 23 à 25, dans lequel ledit liant est choisi dans le groupe comprenant : des résines phénoliques et acryliques, de la paraffine, du brai, du polystyrène, de préférence du brai et des résines phénoliques.

27. Procédé selon l'une quelconque des revendications 23 à 26, dans lequel ledit liant est inclus dans le mélange en quantités de 5 à 30 % en volume, avantageusement de 20 à 26 % en volume.

28. Procédé selon l'une quelconque des revendications 23 à 27, dans lequel la préforme est soumise à un traitement de finition après l'étape g) de pyrolyse.

29. Procédé selon l'une quelconque des revendications 23 à 28, dans lequel le ruban de freinage est soumis à un traitement de finition par un procédé à sec ou au mouillé, après l'étape h).

30. Procédé selon la revendication 28 ou 29, dans lequel lesdits traitements de finition peuvent être effectués après chaque étape a) à h) du procédé selon la revendication 24.

31. Procédé selon l'une quelconque des revendications 23 à 30, dans lequel des fibres de renfort agencées conformément à des directions prédéterminées en des quantités de 4 à 30 % en volume, avantageusement de 10 à 20 % en volume, sont ajoutées après l'étape b).

32. Procédé selon la revendication 33, dans lequel le mélange de l'étape b) est introduit dans le moule ; ainsi, l'anneau de renfort de l'étape a) et enfin le mélange de l'étape d) sont introduits afin d'obtenir un ruban de freinage dans lequel l'anneau de renfort est inclus, lorsque le produit est fini.

33. Procédé selon la revendication 32, dans lequel l'étape c) n'est pas exécutée.

34. Procédé selon la revendication 33, lequel procédé, avant l'étape a), comprend les étapes suivantes qui consistent :
a1) à utiliser une feuille de matériau carbone-carbone ;
a2) à découper deux ou plus de deux secteurs (1) en forme d'arc de cercle ;
a3) à joindre lesdits deux ou plus de deux secteurs du point a2) de façon à obtenir l'anneau de renfort.

35. Procédé selon la revendication 34, dans lequel deux ou plus de deux secteurs sont joints entre eux, avantageusement cinq secteurs.

36. Procédé selon la revendication 34, dans lequel, dans l'étape A2), une pièce unique est découpée sans espace, en une forme d'anneau, qui est introduite directement dans le moule, et l'étape a3) n'est pas exécutée.
